Europäisches Patentamt

**European Patent Office**

Office européen des brevets

(19)

(11) Veröffentlichungsnummer: **0 248 996**
**B1**

(12)  ## EUROPÄISCHE PATENTSCHRIFT

(45) Veröffentlichungstag der Patentschrift:
07.02.90

(21) Anmeldenummer: **87105102.5**

(22) Anmeldetag: **07.04.87**

(51) Int. Cl. [5]: **B 60 G   5/04**

(54) **Verbundachsaggregat.**

(30) Priorität: **10.05.86 DE 3615773**

(43) Veröffentlichungstag der Anmeldung:
**16.12.87 Patentblatt 87/51**

(45) Bekanntmachung des Hinweises auf die Patenterteilung:
**07.02.90 Patentblatt 90/06**

(84) Bennante Vertragsstaaten:
**BE DE ES GB GR IT NL SE**

(56) Entgegenhaltungen:
**DE-A-1 480 019**
**DE-A-1 555 983**
**DE-C-951 975**
**GB-A-1 244 843**
**US-A-3 123 377**
**US-A-3 767 222**
**US-A-3 833 236**

(73) Patentinhaber: **Bergische Achsenfabrik Fr. Kotz & Söhne**
**Am Ohlerhammer**
**D-5276 Wiehl 1 (DE)**

(72) Erfinder: **Steiner, Helmut**
**Freiherr von Stein-Strasse 1**
**D-5276 Wiehl (DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**D-4000 Düsseldorf 11 (DE)**

LIBERGRAF, STOCKHOLM 1990

## Beschreibung

Gegenstand der Erfindung ist ein Verbundachsaggregat mit zwei oder mehr Radachsen für Anhänger, dessen Radachsen mittels Längslenkern geführt und über Blattfederpaare abgefedert sind, die an ihren jeweils äußeren Enden unmittelbar an Gleitstücken fahrgestellfester Konsolen und an ihren einander zugewendeten Enden unmittelbar an Gleitstücken in fahrgestellfesten Konsolen schwenkbar gelagerter Ausgleichsarme gleitend abgestützt, mit Rollen gehalten und in ihrer Mitte mit den Achskörpern verbunden sind.

Ein Verbundachsaggregat der vorstehend beschriebenen Gattung ist aus der DE-C-2 741 250 bekannt. Bei diesem bekannten Verbundachsaggregat sind die Enden der Blattfedern in den fahrgestellfesten Konsolen und in den Ausgleichsarmen gegen Gleitstücke gleitend abgestützt und nicht mit angeformten Augen oder dgl. an ihren Abstützungen eingebunden. Deshalb können sich die Enden der Blattfedern im Fahrbetrieb von ihren Gleitstücken abheben und erzeugen beim Zurückschlagen erhebliche Klappergeräusche, die insbesondere bei Leerfahrten auftreten. Um diesen Klappergeräuschen entgegenzuwirken, ist es aus dem DE-U-7 313 196 bekannt, jeder Tragfeder eine Spreizfeder zuzuordnen, die zusammen mit der Tragfeder an der Achse eingespannt ist und deren Enden gegen Auflagen in den Konsolen bzw. bei Verbundachsaggregaten in deren Ausgleichsarmen drücken, um ein Abheben der Enden der Tragfedern von ihren Gleitstücken zu verhindern. Zu dem gleichen Zweck ist es aus der DE-A-3 151 052 bekannt, in jedem Ausgleichsarm eine Feder anzuordnen, welche die in die Ausgleichsarme hineinragenden Enden der Tragfedern unter Vorspannung gegen ihre Gleitstücke drücken.

Die bekannten Federn zum Verhindern und Dämpfen der Klappergeräusche sind sehr aufwendig. Deshalb ist es aus der US-C-3 799 562 auch schon bekannt geworden, die Federn durch weniger aufwendige Gummirollen zu ersetzen, die unter den Enden der Tragfedern in den Konsolen bzw. Ausgleichsarmen befestigt sind. Diese weniger aufwendige Ersatzlösung arbeitet bei Verbundachsaggregaten aber nur in den festen Konsolen zufriedenstellend, weil dort die Relativbewegungen zwischen den Enden der Blattfedern und ihren Gleitstücken bzw. den Gummirollen verhältnismäßig klein sind. In den Ausgleichsarmen dagegen werden die Gummirollen bei starken Ausschlägen sehr schnell zerquetscht und dadurch funktionsunfähig.

Schließlich ist aus der DE-A-2 216 018 auch noch eine Lagerung einer Blattfeder am Fahrgestellrahmen von Nutzfahrzeugen bekannt geworden, bei der das Federende zwischen zwei Stützkörpern gelagert ist, von denen der untere eine zylindrische Rolle und der obere ein pendelnd gelagertes, segmentartiges zylindrisches Walzstück ist, welches mit einem Teil seiner gewölbten Fläche auf der Oberseite des Federendes aufliegt. Bei dieser Lagerung kann sich der pendelnd gelagerte Stützkörper zwar beim Einfedern auf dem Blattfederende abwälzen, aber der untere zylindrische Stützkörper bleibt dabei ortsfest und kann, wenn es sich um eine Gummirolle handelt bei starken Ausschlägen zerquetscht werden.

Davon ausgehend liegt der Erfindung die Aufgabe zugrunde, bei Verbundachsaggregaten mit gleitend abgestützten Blattfedern die Geräuschdämpfung zu verbessern.

Zur Lösung dieser Aufgabe wird vorgeschlagen, daß die Enden der Blattfedern am Ausgleichsarm mittels schwenkbar gelagerter Halter und einer zwischen diesen befestigten Rolle unter Vorspannung an ihren Gleitstücken anliegen und daß die Rollen am unteren, freien Ende der Halter auf Achsen angeordnet sind und die Blattfedern untergreifen.

Ein nach dieser technischen Lehre ausgebildetes Verbundachsaggregat hat gegenüber der bekannten Maßnahme zur Geräuschdämpfung mit zusätzlichen Federn oder Gummirollen den Vorteil, daß die Enden der Blattfedern auch bei extremen Ausschlägen des Ausgleichsarmes und insbesondere bei Leerfahrt ständig in Kontakt mit ihren Gleitstücken gehalten werden, ohne daß dabei Teile der Blattfederaufhängung frühzeitig funktionsunfähig werden. Dies liegt daran, daß der Abstand zwischen den Gleitstücken der Blattfedern und den Rollen in den Haltern, in dem die Enden der Blattfedern liegen, durch die schwenkbare Lagerung der Halter immer gleich groß bleibt, denn die Verbindungslinie zwischen der Drehachse der Halter und dem Mittelpunkt der Rollen wird sich immer senkrecht zur Längsachse der Blattfedern einstellen, ganz gleich welche Winkellage der Pendelarm einnimmt. Mit dieser Kinematik der Blattfederaufhängung und -einbindung wird auch ein Herausrutschen der Blattfederenden bei extremen Ausschlägen des Ausgleichsarmes vermieden. Das gleiche gilt für die in bevorzugter Ausführungsform auch in den fahrgestellfesten Konsolen angeordneten Halter, obgleich dort die Winkelbewegungen zwischen den Enden der Blattfedern und ihren Gleitstücken erheblich geringer sind.

Weitere Einzelheiten und Vorteile ergeben sich aus der nachfolgenden Beschreibung der zugehörigen Zeichnungen, in denen ein erfindungsgemäß ausgebildetes Verbundachsaggregat schematisch dargestellt worden ist.

In den Zeichnungen zeigen:

Fig. 1 ein Verbundachsaggregat auf einer ebenen Unterlage von der Innenseite her gesehen;

Fig. 2 dasselbe Verbundachsaggregat auf einer unebenen Unterlage von der Innenseite her gesehen;

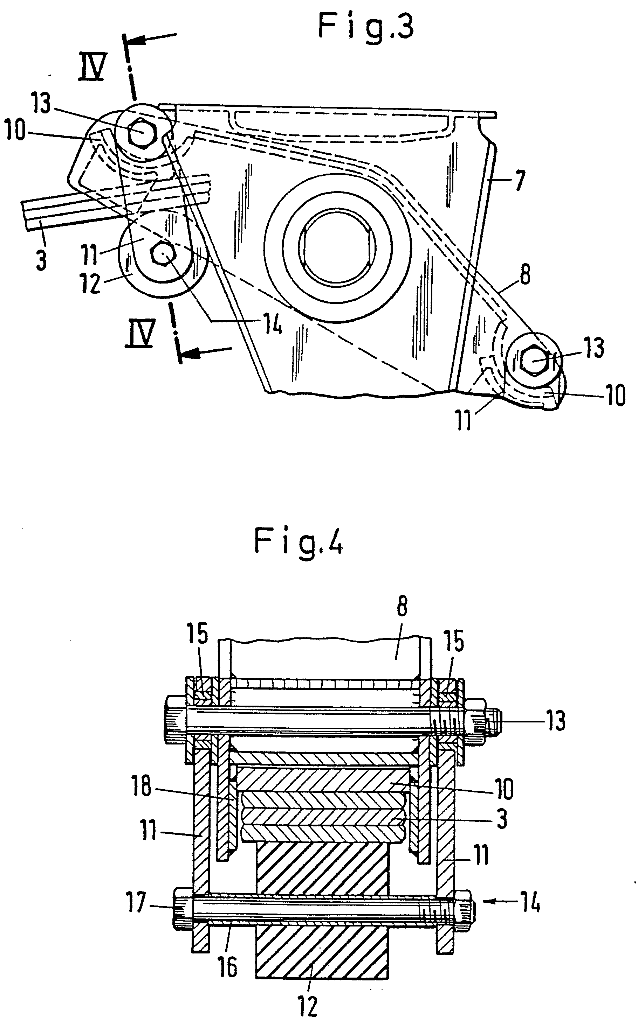

Fig. 3 einen vergrößerten Ausschnitt des Verbundachsaggregates mit einer vergrößerten Darstellung des Ausgleichsarmes und einer Blattfederabstützung- und aufhängung;

Fig. 4 den Ausgleichsarm und eine Blattfederabstützung und -aufhängung entlang der Linie IV – IV in Fig. 3 geschnitten.

Bei dem dargestellten Verbundachsaggregat mit einer vorderen Achse 1 und einer hinteren Achse 2 sind die Achskörper mit mehrlagigen Blattfedern 3 gegen einen Fahrzeugrahmen 4 abgestützt. Die Abstützung der Blattfedern 3 besteht aus fahrgestellfesten vorderen Konsolen 5, hinteren Konsolen 6 und einer mittleren Konsole 7 mit darin schwenkbar gelagerten Ausgleichsarmen 8. In Fahrtrichtung nach vorne werden die Achsen 1 und 2 durch je zwei Längslenker 9 geführt.

Die Blattfedern 3 sind mit ihren Enden an Gleitstücken 10 in den Konsolen 5, 6 und im Ausgleichsarm 8 abgestützt. Damit die Enden der Blattfedern 3 sich nicht von ihren Gleitstücken 10 abheben können, werden sie mit Haltern 11 und Rollen 12 unter Vorspannung in ihrer Lage festgehalten. Zu diesem Zweck sind die Halter 11 mittels Bolzen 13 schwenkbar am Ausgleichsarm 8 gelagert, während die Rollen 12 am unteren, freien Ende der Halter 11 auf Achsen 14 angeordnet sind.

Während die Halter 11 mit aus Ringen 15 bestehenden Gleitlagern auf dem den Pendelarm 8 durchdringenden Bolzen 13 gelagert sind, ist die Rolle 12 mit einer Distanzhülse 16 auf einem die Enden der Halter 11 durchdringenden Bolzen 17 gelagert.

Die Halter 11 können sich bei einer Pendelbewegung des Ausgleichsarmes 8 im Verhältnis zu diesem verschwenken, so daß die Verbindungslinie zwischen dem Bolzen 13 und der Achse 14 immer senkrecht zur Längsachse der Blattfedern 3 verläuft. Dadurch bleibt der Abstand zwischen den Gleitstücken 10 und dem Außenumfang der Rolle 12 stets konstant, so daß eine Verzwängung mit der Folge einer Zerstörung der Rolle 12 nicht eintreten kann. Bei einer Gleitbewegung der Enden der Blattfeder 3 im Spalt zwischen den Gleitstücken 10 und der Rolle 12 kann sich die Rolle 12 um ihre Achse 14 verdrehen.

An der Innenseite des Pendelarmes 8 sind den Enden der Blattfedern 3 zugewendete Verschleißbleche 18 angeschweißt.

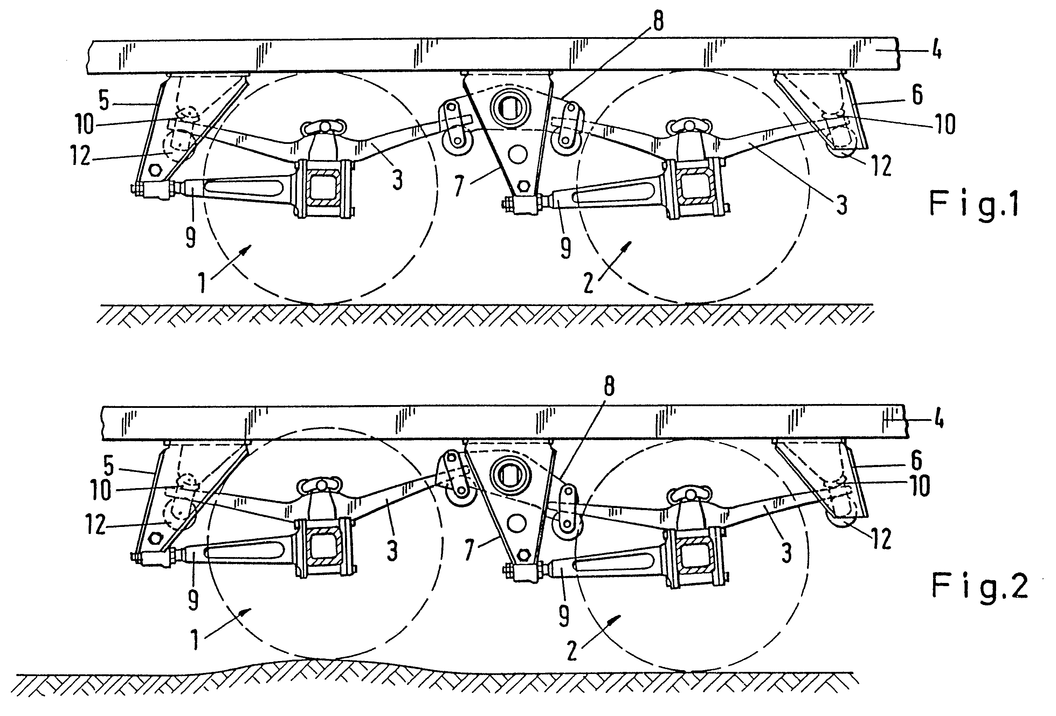

In den vorderen und hinteren Konsolen 5, 6 sind die Enden der Blattfedern 3 ebenfalls gegen Gleitstücke 10 abgestützt und werden mittels Rollen 12 in Anlage gehalten. Dabei können die Rollen 12, wie es in den Fig. 1 und 2 an den vorderen Konsolen 5 dargestellt worden ist, ebenfalls mittels schwenkbarer Halter aufgehängt sein, um die Enden der Blattfedern 3 unter Vorspannung an ihren Gleitstücken 10 festzuhalten. Da die Winkelbewegungen der Enden der Blattfedern in den vorderen und hinteren Konsolen 5, 6 aber erheblich geringer sind als am Pendelarm 8, können die Rollen 12 aber auch nicht schwenkbar gelagert sein, wie es in den Fig. 1 und 2 an der hinteren Konsole 6 dargestellt worden ist.

## Bezugszeichenliste

| | |
|---|---|
| 1 | Achse (vordere) |
| 2 | Achse (hintere) |
| 3 | Blattfeder |
| 4 | Fahrzeugrahmen |
| 5 | Konsole (vordere) |
| 6 | Konsole (hintere) |
| 7 | Konsole (mittlere) |
| 8 | Ausgleichsarm |
| 9 | Längslenker |
| 10 | Gleitstück |
| 11 | Halter |
| 12 | Rolle |
| 13 | Bolzen |
| 14 | Achse |
| 15 | Ring |
| 16 | Distanzhülse |
| 17 | Bolzen |
| 18 | Verschleißblech |

## Patentansprüche

1. Verbundachsaggregat mit zwei oder mehr Radachsen für Anhänger, dessen Radachsen mittels Längslenkern (9) geführt und über Blattfederpaare (3) abgefedert sind, die an ihren jeweils äußeren Enden unmittelbar an Gleitstücken (10) fahrgestellfester Konsolen (5, 6) und an ihren einander zugewendeten Enden unmittelbar an Gleitstücken (10) in fahrgestellfesten Konsolen (7) schwenkbar gelagerter Ausgleichsarme (8) gleitend abgestützt, mit Rollen (12) gehalten und in ihrer Mitte mit den Achskörpern verbunden sind, *dadurch gekennzeichnet*, daß die Enden der Blattfedern (3) am Ausgleichsarm (8) mittels schwenkbar gelagerter Halter (11) und einer zwischen diesen befestigten Rolle (12) unter Vorspannung an ihren Gleitstücken (10) anliegen und daß die Rollen (12) am unteren, freien Ende der Halter (11) auf Achsen (14) angeordnet sind und die Blattfedern (3) untergreifen.

2. Verbundachsaggregat nach Anspruch 1, *dadurch gekennzeichnet*, daß die schwenkbaren Halter (11) und Rollen (12) auch in den vorderen und hinteren fahrgestellfesten Konsolen (5, 6) angeordnet sind.

3. Verbundachsaggregat nach Anspruch 1, *dadurch gekennzeichnet*, daß die Halter (11) mittels aus Ringen (15) bestehender Gleitlager auf den Ausgleichsarm (8) durchdringenden Bolzen (13) gelagert sind.

4. Verbundachsaggregat nach Anspruch 1, *dadurch gekennzeichnet*, daß die Rollen (12) mittels Distanzhülsen (16) auf die Halter (11) durchdringenden Bolzen (17) drehbar gelagert sind.

5. Verbundachsaggregat nach Anspruch 1, *dadurch gekennzeichnet*, daß die Rollen (12) aus einem verschleißfesten elastischen Material, beispielsweise Gummi bestehen.

## Claims

1. Compound axle assembly with two or more wheel axles for trailers, the wheel axles of which are controlled by means of longitudinal control arms (9) and spring-suspended via leaf spring pairs (3), which are directly supported in a sliding manner at their respective outer ends at sliding members (10) of brackets (5, 6), which are fixed to the chassis, and at their facing ends at sliding members (10) in brackets (7), which are fixed to the chassis, of pivotably mounted compensating arms (8), are held by rollers (12) and are connected at their centre to the axle bodies, characterised in that the ends of the leaf springs (3) at the compensating arm (8) bear against their sliding members (10) in a preloaded state by means of pivotably mounted holders (11) and a roller (12), which is secured between these, and that the rollers (12) are arranged on shafts (14) at the lower, free end of the holders and engage under the leaf springs (3).

2. Compound axle assembly according to claim 1, characterised in that the pivotable holders (11) and rollers (12) are also arranged in the front and rear brackets (5, 6), which are fixed to the chassis.

3. Compound axle assembly according to claim 1, characterised in that the holders (11) are mounted on pins (13), which penetrate the compensating arm (8), by means of sliding bearings consisting of rings (15).

4. Compound axle assembly according to claim 1, characterised in that the rollers (12) are rotatably mounted on pins (17), which penetrate the holders (11), by means of spacer sleeves (16).

5. Compound axle assembly according to claim 1, characterised in that the rollers (12) consist of a wear-resistant elastic material, for example rubber.

## Revendications

1. Ensemble d'essieux groupés comportant au moins deux essieux, pour remorques, les essieux de cet ensemble étant guidés au moyen de bras oscillants longitudinaux (9) et suspendus au moyen de couple de ressorts à lames (3) dont les extrémités extérieures s'appuient à coulissement directement sur des coulisses respectives (10) de consoles (5, 6) solidaires du châssis et dont les extrémités dirigées l'une vers l'autre s'appuient à coulissement directement sur des coulisses (10) de bras d'équilibrage (8) montés à pivot dans des consoles (7) solidaires du châssis, ces couples de ressorts étant maintenus par des galets (12) et étant assemblés en leur milieu avec les corps d'essieux, caractérisé en ce que les extrémités des ressorts à lames (3) reposent sur le bras d'équilibrage (8) au moyen de supports (11) montés à pivot et d'un galet (12) maintenu entre ces supports, en étant appliqués sous précontrainte sur leurs coulisses (10) et en ce que les galets (12) sont disposés à l'extrémité libre, inférieure, des supports (11) et s'engagent sous les ressorts à lames (3).

2. Ensemble d'essieux groupés selon la revendication 1, caractérisé en ce que les supports pivotants (11) et les galets (12) sont également disposés dans les consoles avant et arrière (5, 6) solidaires du châssis.

3. Ensemble d'essieux groupés selon la revendication 1, caractérisé en ce que les supports (11) sont montés à pivot au moyen de paliers à glissement constitués de bagues (15) sur les boulons (13) traversant le bras d'équilibrage (8).

4. Ensemble d'essieux groupés selon la revendication 1, caractérisé en ce que les galets (12) sont montés à rotation au moyen de douilles entretoises sur des axes (17) traversant les supports (11).

5. Ensemble d'essieux groupés selon la revendication 1, caractérisé en ce que les galets (12) sont constitués en un matériau élastique résistant à l'usure par exemple en caoutchouc.

Fig.1

Fig.2

EP 0 248 996 B1

# Fig.3

# Fig.4